# EUROPÄISCHE PATENTSCHRIFT

(11) **EP 0 413 711 B1**
(45) Veröffentlichungstag und Bekanntmachung des Hinweises auf die Patenterteilung: **28.07.1993**
(21) Anmeldenummer: 89904781.5
(22) Anmeldetag: 28.04.1989
(51) Int. Cl.: B29D 30/72, B60C 13/04

(54) **GERÄT FÜR DAS AUFBRINGEN VON ZIERRINGEN U. DGL. AUF ROTATIONSSYMMETRISCHE GUMMIGEGENSTÄNDE**
APPARATUS FOR APPLYING DECORATIVE RINGS AND THE LIKE ON ROTATIONALLY SYMMETRICAL RUBBER OBJECTS
APPAREIL D'APPLICATION DE BAGUES DECORATIVES ET SIMILAIRES SUR DES OBJETS EN CAOUTCHOUC A SYMETRIE DE ROTATION

(30) Priorität: 06.05.1988 DE 3815542
(43) Veröffentlichungstag der Anmeldung: 27.02.1991
(73) Patentinhaber: STAHLGRUBER Otto Gruber GmbH & Co., 81675 München (DE)
(72) Erfinder: SCHEURER, Hans, D-8000 München 80 (DE)
(74) Vertreter: Huss, Carl-Hans, Dipl.-Ing.
(86) Internationale Anmeldenummer: DE8900273
(87) Internationale Veröffentlichungsnummer: WO8910835

(56) Entgegenhaltungen:
- FR-A- 2 386 413
- US-A- 3 218 208
- US-A- 3 427 215
- US-A- 3 944 457
- US-A- 4 009 072

## Beschreibung

Die Erfindung richtet sich auf ein Gerät für das nachträgliche Anbringen von Zierringen, ringförmig angeordneten Beschriftungen, Ornamenten und dergleichen auf rotationssymmetrische Gummigegenstände, insbesondere auf die neben der Lauffläche liegende, sichtbare Oberfläche von Fahrzeugreifen. Mit Zierringen versehene Fahrzeugreifen sind bisher vor allem als sog. "Weißwandreifen" bekannt, jedoch können mit dem Gerät nach der Erfindung Ringe auch anderer Farbe in variabler Breite, ebenso wie ringförmig oder teilringförmig angeordnete typographische Zeichen oder überhaupt Verzierungen verschiedener Art angebracht werden.

Das nachträgliche Anbringen derartiger Zierringe wurde bisher meist auf dem von der Reifenfelge abgenommenen Reifen vorgenommen, wobei zunächst eine ringförmige Nut in die Seitenwände des Reifens mit einer von Hand geführten Schleifscheibe eingeformt wird, was nur bei sehr Versierten die Erzeugung einer wirklich genau kreisrunden und gleich breiten Nut gewährleisten kann.

Durch die US-A-3 218 208 ist zwar eine Vorrichtung bekanntgeworden, mit der sich die für das Einlegen eines Zierstreifens erforderliche Nut maschinell und damit von der Geschicklichkeit einer Bedienungsperson unabhängig anbringen läßt, und bei der der Reifen auf der Felge verbleiben kann. Hierzu weist diese Vorrichtung eine senkrecht gelagerte drehbare Welle auf, auf deren Ende mittels eines Zentrierkonus die Felge befestigt werden kann und ferner einen mittels drehbarer Welle artgetriebenen und an einem Anstellarm befestigten Fräser, mit dem die Nut in die Reifenseitenfläche eingebracht wird. Damit ist diese Vorrichtung nur dafür geeignet und dazu bestimmt, einen von drei aufeinanderfolgenden Arbeitsgängen, nämlich die Einbringung einer Nut in die Reifenfläche, durchzuführen, während mit ihr das Einlegen eines Farbstreifens und das Einvulkanisieren desselben nicht besorgt werden kann.

Das Einbringen einer ringförmigen Nut in die Seitenfläche eines Reifens, in die nach Aufrauhung und Einstrich mit einer Vulkanisierlösung ein vorgefertigter Zierring eingelegt und danach unter Aufwendung von Druck und Hitze in einer besonderen Vorrichtung mit der Reifenfläche zusammenvulkanisiert werden muß, ist aber nicht nur umständlich, sondern beeinflußt bei modernen Reifen mit ihrer nur geringen Gummidicke an den Seiten auch die Stabilität und Festigkeit nachteilig.

Durch die FR-A-2 386 413 ist ferner für die Reparatur von Reifenlaufflächen oder -schultern eine Vorrichtung bekanntgeworden, mit der Kautschukstreifen auf einen von der Felge abgenommenen Reifen aufgebracht werden können. Hierzu wird der senkrecht stehende, auf einer Stützfläche abrollbare Reifen beidseits von drehenden Mitnehmerscheiben erfaßt, die gleichzeitig den Reifen abdichten, wonach auf beiden Seiten gleichzeitig je ein Kautschukstreifen durch eine Gummiwalze oder -bürste gegen den Reifen angepreßt wird. Diese Vorrichtung ist demnach nicht für die Anbringung von Zierringen bestimmt. Bei einem senkrecht stehenden Reifen wäre auch die Kontrolle des genauen Sitzes von Zierringen ohne Herausnahme des Reifens aus der Vorrichtung schwierig, und außerdem müssen auch bei dieser vorbekannten Vorrichtung die angepreßten Streifen anschließend in einer besonderen Vulkanisiervorrichtung mit dem Reifen zusammenvulkanisiert werden.

Der Erfindung lag deshalb die Aufgabe zugrunde, ein Gerät zu schaffen, das die Anbringung mindestens eines Zierringes auf den auf der Felge montierten Reifen mit gleichzeitiger Aufvulkanisation in einem Arbeitsgang bei hoher Geschwindigkeit ohne die Notwendigkeit, in die Reifenfläche eine Nut einzubringen, gestattet. Diese Aufgabe löst die Erfindung mit einem Gerät für das Aufbringen von Zierringen, ringförmig oder teilringförmig angeordneten Beschriftungen, Ornamenten und dergl. in Streifenform auf eine neben der Lauffläche liegende sichtbare Oberfläche eines Fahrzeugreifens mit einem durch eine Welle antreibbaren, mit dem zu bearbeitenden Reifen drehfest verbindbaren Drehteller und einem gegen die Reifenfläche anstellbaren, abrollbaren Aufbringelement dadurch, daß der Drehteller für die liegende Aufnahme des auf der Felge montierten Reifens waagerecht angeordnet ist und das Aufbringelement ein in einem reifenseitig offenen Radgehäuse gelagertes beheizbares Aufbringrad ist.

Die Erfindung ist in den Zeichnungen an einem, keinen Anspruch auf Vollständigkeit erhebenden Ausführungsbeispiel erläutert und anhand desselben nachfolgend beschrieben. Es stellen dar:

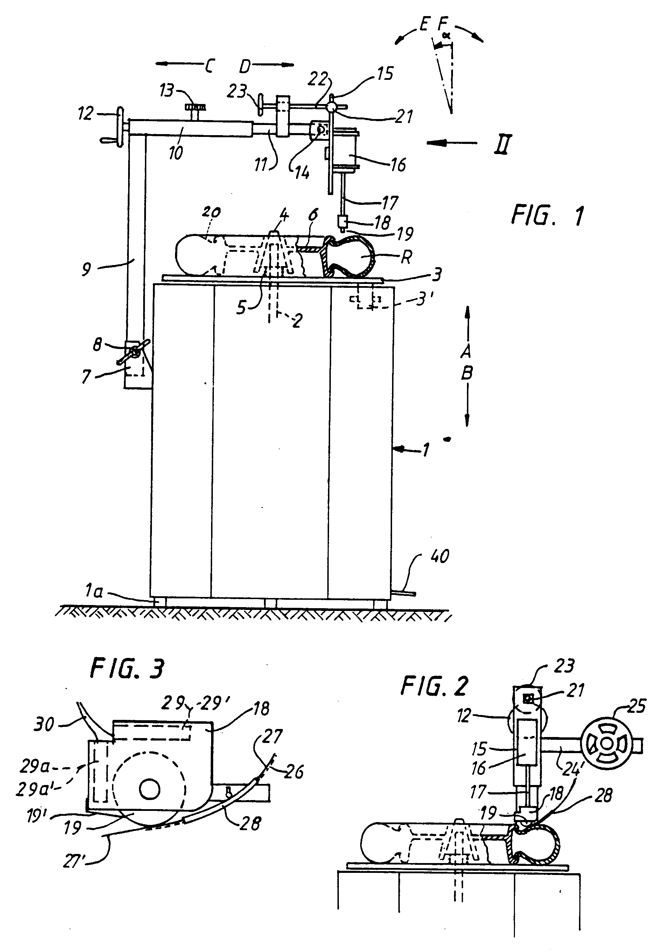

- Fig. 1: eine Seitenansicht des Geräts nach der Erfindung, schematisch und in verkleinertem Maßstab;
- Fig. 2: eine Vorderansicht des Oberteils des Geräts nach Fig. 1, gesehen in Pfeilrichtung II und im Maßstab der Fig. 1;
- Fig. 3: eine Einzelheit der Erfindung in vergrößertem Maßstab;
- Fig. 4: eine perspektivische Ansicht des Oberteils des Gerätes nach Fig. 1;
- Fig. 5: schematisch und im Vertikalschnitt ein Aufbringrad anderer Ausführungsform in einem gegenüber Fig. 3 weiter vergrößerten Maßstab.

Zur Vereinfachung der nachfolgenden Beschreibung ist nur die Anbringung von Zierringen auf Fahrzeugreifen angesprochen, aber die Erfindung deshalb nicht darauf beschränkt.

Allgemein mit 1 ist ein z.B. aus Profilen 1a zusammengesetztes, außen verkleidetes Gerätegestell bezeichnet, in dem senkrecht eine Welle 2 gelagert ist, die auf beliebige geeignete Weise über eine Untersetzung, z.B. einen Zahnriemen, in Umdrehung versetzt werden kann. Die Welle ist drehfest mit einem Teller 3 verbunden, der einen solchen Durchmesser aufweist, daß er Reifen unterschiedlicher Größe aufnehmen kann. Auf ihr Ende ist ein Zentrierkonus 4 aufgesetzt, der drehfest aber in Pfeilrichtung A-B verschiebbar gelagert sein kann und sich dann zweckmäßig auf einer Feder 5 abstützt. Dieser Zentrierkonus 4 ist so dimensioniert, daß er auf die entsprechende konische Ausnehmung moderner Normalfelgen unterschiedlicher Größe abgestimmt ist. Auf den Zentrierkonus 4 kann im Bedarfsfalle auch ein innen genau passender, im Außendurchmesser größerer Konus, zweckmäßig aus hartem Gummi, aufgesetzt werden, der dann noch größere Reifen, z.B. LKW-Reifen zentriert. Durch diese Dimensionierung und die Abstützung des Zentrierkonus durch eine Feder wird gewährleistet, daß der zu bearbeitende, auf der Felge 6 montierte Reifen R mit seiner Unterfläche immer glatt auf dem Drehteller 3 aufliegt, um bei dessen Drehung mitgenommen zu werden. Hierzu kann unterstützend ein - nicht dargestellter - Reibbelag, beispielsweise aus Gummi, auf der Oberfläche des Drehtellers dienen. Auf den Zentrierkonus 4 wird, wie dargestellt, der Reifen R mit Felge von oben aufgesetzt.

Um eine Verkantung des Drehtellers 3 beim Umlauf mit aufliegendem Reifen zu verhindern, ist in seinem Außenbereich mindestens eine Stützrolle 3' im Gestell 1 freilaufend gelagert.

Seitlich am Gestell 1 ist bei dem dargestellten Beispiel in einer gabelförmigen Lasche 7, um die Achse 8 schwenkbar und feststellbar, ein Tragarm 9 gelagert, an dem rechtwinklig und diesen zu einem Galgen vervollständigend ein Hohlprofil 10, zweckmäßig ein Vierkantprofil, befestigt ist. In dem Profil 10 ist mit geringem Spiel ein Profil 11 teleskopartig verschiebbar aufgenommen, das durch eine - nicht dargestellte - Spindel mittels eines Handrades 12 in Pfeilrichtung C-D verschiebbar ist. 13 ist eine Feststellschraube für die mittels des Handrades 12 eingestellte Lage der Spindel und damit der nachfolgend beschriebenen Anrolleinrichtung.

Der Tragarm 9 kann aber auch ein Rundprofil sein und dann in einem, der Lasche 7 entsprechenden Lager um seine Achse drehbar angeordnet sein, so daß der Galgen 9-10 nicht nach hinten gekippt, sondern seitlich aus dem Bereich über dem Teller 3 weggeschwenkt werden kann. In diesem Fall kann der Galgen 9-10 als Ganzes in Richtung A-B heb- und senkbar angeordnet sind, z.B. dadurch, daß das Ende des Profils 9 eine Verzahnung aufweist, mit der ein durch eine Kurbel betätigbares Ritzel kämmt, das im Lager des Profils gelagert ist.

Ebenso kann bei einer vereinfachten Ausführungsform auf den Spindeltrieb mit Handhabe 12 verzichtet werden und das Profil 11 in dem Profil 10 von Hand in Pfeilrichtung C-D verschoben werden und dann die gewünschte Stellung mit der Feststellschraube 13 fixiert werden.

Um die Achse 14 schwenkbar ist am freien Ende des in Längsrichtung verschiebbaren Profils 11 eine Tragplatte 15 gelagert, an der ein Pneumatikmotor 16 befestigt ist. Dieser kann auf geeignete Weise, z.B. direkt über seine Kolbenstange 17 am freien Ende ein Radgehäuse 18 mit Aufbringrad 19 tragen oder einen auf der Platte 15 gleitend geführten Schlitten bewegen, an dem das Radgehäuse 18 angelenkt ist.

Um die Andrückfläche des Aufbringrades 19 der von Reifenart und -größe abhängigen Schräge 20 des zu bearbeitenden Reifens R anpassen zu können, d.h den Anstellwinkel α der Tragplatte 15 verändern zu können, ist in der Tragplatte 15 eine Mutter 21 drehbar gelagert, in der eine Spindel 22 geführt ist, die mit einer Kurbel oder einem Rad 23 gedreht werden kann. Bei dem dargestellten Beispiel ist die Spindel 22 in einem am Profil 11 angelaschten Block gelagert. Auf diese Weise kann die Tragplatte 15 um die Achse 14 in verschiedene Winkelstellungen eingestellt werden und dementsprechend wird die Kolbenstange 17 mit Radgehäuse 18 und Rad 19 verschiedene Schräglagen einnehmen können. Mit dem Profil 10 erfolgt also die Grobeinstellung entsprechend dem Reifendurchmesser in Pfeilrichtung C-D und mit der Spindel 22 die Feineinstellung entsprechend der Schräge der zu bearbeitenden Fläche in Pfeilrichtung E-F.

An der Tragplatte 15 ist ferner, z.B. mittels eines Armes 24, eine Vorratsspule 25 gelagert, auf der die auf die Reifenoberfläche aufzuvulkanisierende dünne Farbschicht auf einen Trägerstreifen, z.B. aus Papier, aufgespult ist.

Für die exakte Führung des zu verarbeitenden Streifens 26 mit Tragschicht 27 unter das Aufbringrad 19 ist ferner eine Streifenführung 28 vorgesehen, die bei dem dargestellten Beispiel an dem Radgehäuse 18 angebracht ist. Nach der Aufbringung des Zierstreifens wird die Tragschicht als Abfall 27' abgeführt. Um einerseits auf der Umfangsfläche des Anrollrades anbackenden Schmutz abzustreifen und andererseits zu verhindern, daß der Tragschichtabfall 27' sich auf dem Rad 19 aufwickelt, kann ein dünner, blattfederartiger Abstreifer 19' vorgesehen sein.

Diese in der Zeichnung nur schematisch dargestellte Streifenführung kann z.B. aus einem gekrümmten Aluminiumgehäuse bestehen, das einen auswechselbaren Einsatz aus Kunststoff aufnimmt, der eine der Streifenbreite angepaßte Nut aufweist. Dabei kann die Nut, je nachdem, ob der aufzubringende Streifen in der Mitte der Seitenreifenfläche oder von dieser verschoben aufzubringen ist, im Kunststoffeinsatz entsprechend liegen. Der Einsatz aus Kunststoff verhindert, daß zuviel Wärme von dem Anrollrad auf den Streifen übertragen wird.

Das Aufbringrad 19 ist in dem Radgehäuse 18 so gelagert, daß etwa 3/4 bis 2/3 desselben sich innerhalb des Gehäuses befinden.

In das Gehäuse sind ferner Heizpatronen, beispielsweise paarweise vier Heizpatronen 29,29' und 29a,29a' eingesetzt, die über Leitungen 30 an eine Stromquelle angeschlossen sind. Bei dem dargestellten Beispiel sind die Heizpatronen so im rechten Winkel zueinander angeordnet, daß sie zwischen sich einen erheblichen Teil des Anrollrades aufnehmen und ihre Wirkung sich auf dieses konzentriert. Da sich stets der größere Teil des Anrollrades 19 innerhalb des durch das Gehäuse 18 abgeschirmten Gehäuseraumes befindet, genügt die Aufheizung durch die Heizpatronen 29, um durch direkte Strahlungswärme das Rad auf die für die Vulkanisation nötige Hitze von etwa 150⁰ C zu erwärmen.

Die gleiche Wirkung wird erreicht, wenn die Heizpatronen 29,29' im Radgehäuse 18 den Patronen 29a,29a' auf der anderen Radseite gegenüberliegen.

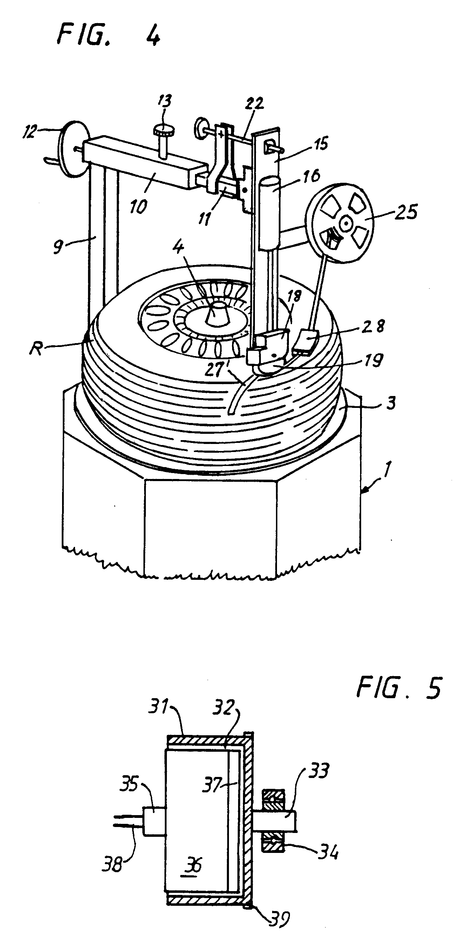

In Fig. 5 ist eine weitere Möglichkeit der Beheizung des Anrollrades 19 schematisch veranschaulicht. Hierzu ist das Anrollrad 31 topfförmig, d.h. auf einer Seite offen und einen Hohlraum 32 bildend, gestaltet. Mittels der Achse 33 und Kugellagern 34 ist es im nicht dargestellten Gehäuse 18 gelagert. In den Hohlraum 32 des Anrollrades 31 ragt ein mit einem Zapfen 35 im Gehäuse feststehend gelagerter Block 36 hinein, dessen Frontbereich eine Heizplatte 37 einnimmt, die über Anschlüsse 38 geheizt wird.

Fig. 5 veranschaulicht auch, daß das Anrollrad 19 bzw. 31 auf einem geringen Teil seiner Breite mit einer Rändelung oder Verzahnung geringer Tiefe 39 versehen sein kann, die sich bei der Drehung des Reifens in dessen Seitenwand eingräbt und damit ein seitliches Verschieben des Reifens beim Umlauf verhindert. Diese Rändelung liegt zweckmäßig auf der der Welle 2 zugewandten Seite.

Der Kolben des Pneumatikmotors 16 kann über eine - nicht dargestellte - Leitung, z.B. mittels eines Fußpedals 40 am Gestell 1 so gesteuert werden, daß je nach Größe des Reifens und Beschaffenheit der zu bearbeitenden Fläche das Anrollrad 19 mit einem Druck von 3 bis 8 bar gegen die Fläche des Reifens anpreßbar ist, der seinen Normaldruck von etwa 2 bar beibehält. Durch den Druck des Anrollrades auf die Unterlage und durch die vom Rad auf die vulkanisierbare Farbe übertragene Wärme, wird diese also auf die Reifenfläche fest aufvulkanisiert, während der Trägerstreifen als Abfall weggeführt wird. Dabei dreht sich der Reifen R auf dem Teller 3 unter dem Auftragrad 19, und zwar mit einer solchen Geschwindigkeit, daß z.B. bei einem Reifen normaler Größe in 90 Sekunden ein Zierstreifen einer Breite von 20 mm fest auf die Reifenfläche aufvulkanisiert wird.

Da die aufvulkanisierte Farbschicht sehr dünn, der Anpreßdurck des Aufbringrades sowie die Erwärmung desselben relativ hoch ist, benötigt der Reifen vor dem Aufbringen des Zierringes keine andere Behandlung der zu vulkanisierenden Fläche, als die mit einer sog. "chemischen Aufrauher", wie er z.B. unter dem Handelsnamen "Liquid Buffer" der Firma Stahlgruber Otto Gruber GmbH & Co. auf dem Markt ist, also kein mechanisches Aufrauhen und kein Einstreichen mit einer Vulkanisierlösung.

Die Steuerung der Heiztemperatur, des den Drehteller bewegenden E-Motors und des Pneumatikmotors sind dem Fachmann geläufig und nicht Gegenstand der Erfindung.

Mit dem Gerät nach der Erfindung können Streifen unterschiedlicher Breite und Farbe ohne Abnahme des Reifens von der Felge in sehr kurzer Zeit in Ringform auf die Seitenfläche eines Reifens ohne eine andere Vorbehandlung als die Reinigung der zu bearbeitenden Fläche aufgebracht werden. Diese Streifen können nach der Anwendung einen Zierring formen, können aber auch Ornamente oder Aufschriften sein, z.B. der Name einer Spedition oder anderen Firma oder Anweisungen, beispielsweise über Luftdruck, Inspektion u. dgl. geben. Das Gerät wurde in erster Linie für den Einsatz in Vulkanisierbetrieben entwickelt, aber es ist auch für den Reifenhersteller und -händler, sowie mehrere Kraftfahrzeuge besitzende Unternehmen, z.B. Großfirmen und Speditionen nützlich.

## Patentansprüche

1. Gerät für das Aufbringen von Zierringen, ringförmig oder teilringförmig angeordneten Beschriftungen, Ornamenten und dergl. in Streifenform auf eine neben der Lauffläche liegende sichtbare Oberfläche eines Fahrzeugreifens (R) mit einem durch eine Welle (2) antreibbaren, mit dem zu bearbeitenden Reifen (R) drehfest verbindbaren Drehteller und einem gegen die Reifenfläche anstellbaren abrollbaren Aufbringelement, dadurch **gekennzeichnet,** daß der Drehteller (3) für die liegende Aufnahme des auf der Felge (6) montierten Reifens (R) waagerecht angeordnet ist und das Aufbringelement ein in einem reifenseitig offenen Radgehäuse (18) gelagertes beheizbares Aufbringrad (19) ist.

2. Gerät nach dem Anspruch 1, dadurch **gekennzeichnet,** daß das freie Ende der Welle (2) einen Zentrierkonus (4) trägt, dessen Konizität der der Zentrieröffnung einer Fahrzeugreifenfelge (6) entspricht.

3. Gerät nach dem Anspruch 2, dadurch **gekennzeichnet,** daß der Zentrierkonus (4) drehfest aber in Längsrichtung verschiebbar auf dem Ende der Welle (2) angebracht und durch eine Feder (5) abgestützt ist.

4. Gerät nach dem Anspruch 1, dadurch **gekennzeichnet,** daß das Gehäuse (18) mit Aufbringrad (19) direkt oder indirekt am freien Ende einer Kolbenstande (17) eines Pneumatikmotors (16) befestigt ist.

5. Gerät nach den Ansprüchen 1 und 4, dadurch **gekennzeichnet,** daß der Pneumatikmotor (16) um eine Achse (14) schwenkbar an einem Galgen (9,10) befestigt ist.

6. Gerät nach den Ansprüchen 1 und 5, dadurch **gekennzeichnet,** daß der waagrechte Teil des Galgens ein Hohlprofil (10) ist, in dem teleskopartig ein Profil (11) verschiebbar aufgenommen ist.

7. Gerät nach den Ansprüchen 1 sowie 5 und 6, dadurch **gekennzeichnet,** daß der Tragarm (9) um eine Achse (8) schwenkbar am Gestell (1) befestigt ist.

8. Gerät nach den Ansprüchen 1 sowie 5 und 6, dadurch **gekennzeichnet,** daß der Tragarm (9) um seine Mittelachse drehbar am Gestell (1) gelagert ist.

9. Gerät nach dem Anspruch 1, dadurch **gekennzeichnet,** daß das Gehäuse (18) elektrisch gespeiste Heizpatronen (29) aufnimmt.

10. Gerät nach den Ansprüchen 1 und 9, dadurch **gekennzeichnet,** daß die Heizpatronen (29,29a), paarweise im Gehäuse (18) untergebracht sind und das Anrollrad (19) zwischen sich aufnehmen.

11. Gerät nach dem Anspruch 1, dadurch **gekennzeichnet,** daß das Anrollrad (31) topfartig mit einem Hohlraum (32) ausgebildet ist, in den ein feststehender Block (36) hineinragt, dessen Frontbereich als Heizplatte (37) ausgebildet ist.

12. Gerät nach dem Ansprüchen 1 sowie 9 und 10, dadurch **gekennzeichnet,** daß das Anrollrad (19,31) über einen geringen Teil seiner Breite mit einer Rändelung oder Verzahnung (39) versehen ist.

13. Gerät nach dem Anspruch 5, dadurch **gekennzeichnet,** daß der Pneumatikmotor (16) auf einer Tragplatte (15) montiert ist, die auch an einem an ihr befestigten Arm (24) eine Vorratsspule (25) für den aufzuvulkanisierenden Farbstreifen trägt.

14. Gerät nach dem Anspruch 1, dadurch **gekennzeichnet,** daß am Gehäuse (18) eine gebogene Zuführung (28) für den aufzuvulkanisierenden Farbstreifen (26,27) angeordnet ist.

15. Gerät nach dem Anspruch 14, dadurch **gekennzeichnet,** daß die gebogene Zuführung (28) auswechselbare, der Krümmung angepaßte Einsätze aus Kunststoff aufnimmt, die eine der Breite des Streifens (26-27) und Aufbringlage auf der Reifenfläche angepaßte Führungsnut aufweisen.

## Claims

1. Apparatus for applying decorative rings, inscriptions, ornaments and the like arranged in the form of a ring or part of a ring in strip form to a visible surface of a vehicle tyre (R) located close to the tread, with a turntable drivable by a shaft (2) and connectable with the tyre (R) to be treated so as to be fast in rotation therewith, and with a rollable applicator element which can be placed against the tyre surface, characterised in that the turntable (3) is arranged horizontally for receiving the tyre (R) in a horizontal position mounted on the wheel (6) and the applicator element is a heatable applicator wheel (19) mounted in a wheel housing (18) open on the side where the tyre is located.

2. Apparatus according to claim 1, characterised in that the free end of the shaft (2) bears a centring cone (4) whose conicity corresponds to that of the centring opening of the wheel (6) of a vehicle tyre.

3. Apparatus according to claim 2, characterised in that the centring cone (4) is mounted fast in rotation, but slidable in the longitudinal direction, on the end of the shaft (2) and is supported by a spring (5).

4. Apparatus according to claim 1, characterised in that the housing (18) with the applicator wheel (19) is fixed directly or indirectly on the free end of a piston rod (17) of a compressed air motor (16).

5. Apparatus according to claims 1 and 4, characterised in that the compressed air motor (16) is attached to a gallows (9, 10) to be swingable about a pivot (14).

6. Apparatus according to claims 1 and 5, characterised in that the horizontal part of the gallows is a hollow section (10) in which a section (11) is slidably accommodated in telescopic fashion.

7. Apparatus according to claims 1 and 5 and 6, characterised in that the supporting arm (9) is attached to the frame (1) to be swingable about a spindle (8).

8. Apparatus according to claims 1 and 5 and 6, characterised in that the supporting arm (9) is mounted to be rotatable about its central axis on the frame (1).

9. Apparatus according to claim 1, characterised in that the housing (18) accommodates electrically supplied heating dies (29).

10. Apparatus according to claims 1 and 9, characterised in that the heating dies (29, 29a) are accommodated in pairs in the housing (18) and receive the roll-on wheel (19) between them.

11. Apparatus according to claim 1, characterised in that the roll-on wheel (31) is formed like a pot with a hollow space (32) into which projects a stationary block (36) whose front zone is in the form of a heating plate (37).

12. Apparatus according to claims 1 and 9 and 10, characterised in that the roll-on wheel (19, 31) is provided with a milling or toothing (39) over a small part of its width.

13. Apparatus according to claim 5, characterised in that the compressed air motor (16) is mounted on a supporting plate (15) which also bears, on an arm (24) fixed to it, a supply reel (25) for the coloured strip to be vulcanised on.

14. Apparatus according to claim 1, characterised in that a curved lead element (28) for the coloured strip (26, 27) to be vulcanised on is arranged on the housing (18).

15. Apparatus according to claim 14, characterised in that the curved lead element (28) accommodates exchangeable plastics inserts adapted to the curvature which have a guide groove adapted to the width of the strip (26-27) and the position of application to the tyre surface.

## Revendications

1. Dispositif destiné à appliquer des anneaux décoratifs, des inscriptions en forme d'anneau de parties d'anneau, des ornements et similaires en forme de bande sur une surface visible, située à côté de la bande d'usure d'un pneumatique (R) d'un véhicule automobile, comportant un plateau tournant entraîné par un arbre (2), solidaire en rotation avec le pneumatique (R) à traiter ainsi qu'un élément d'application roulant, ajustable contre la surface du pneumatique, caractérisé en ce que le plateau tournant (3) destiné à recevoir à plat le pneumatique (R) monté sur la jante (6), est disposé horizontalement et en ce que l'élément d'application est une roue d'application (19) pouvant être chauffée, montée dans un boîtier de roue (18) ouvert côté pneumatique.

2. Dispositif selon la revendication 1, caractérisé en ce que l'extrémité libre de l'arbre (2) porte un cône de centrage (4) dont la conicité correspond à celle de l'ouverture de centrage d'une jante (6) d'un pneumatique de véhicule.

3. Dispositif selon la revendication 2, caractérisé en ce que le cône de centrage (4) est monté solidaire en rotation, mais coulissant dans la direction longitudinale, sur l'extrémité de l'arbre (2) et est soutenu par un ressort (5).

4. Dispositif selon la revendication 1, caractérisé en ce que le boîtier (18) avec la roue d'application (19) est fixé directement ou indirectement à l'extrémité libre d'une tige de piston (17) d'un moteur pneumatique (16).

5. Dispositif selon les revendications 1 et 4, caractérisé en ce que le moteur pneumatique (16) est fixé sur une potence (9, 10), de manière à pouvoir pivoter autour d'un axe (14).

6. Dispositif selon les revendications 1 et 5, caractérisé en ce que la partie horizontale de la potence est un profilé creux (10) dans lequel est logé coulissant, de manière télescopique, un profilé (11).

7. Dispositif selon les revendications 1 ainsi que 5 et 6, caractérisé en ce que le bras de support (9) est fixé sur le bâti (1) de manière à pouvoir pivoter autour d'un axe (8).

8. Dispositif selon les revendications 1 ainsi que 5 et 6, caractérisé en ce que le bras de support (9) est monté sur le bâti (1), de manière à pouvoir tourner autour de son axe médian.

9. Dispositif selon la revendication 1, caractérisé en ce que le boîtier (18) loge des cartouches chauffantes (29) alimentées électriquement.

10. Dispositif selon les revendication 1 et 9, caractérisé en ce que les cartouches chauffantes (29, 29a) sont logées par paires dans le boîtier (18) et logent entre elles la roue de roulement (19).

11. Dispositif selon la revendication 1, caractérisé en ce que la roue de roulement (31) a la forme d'un pot avec une cavité (32) dans laquelle s'engage un bloc (36) fixe dont la zone frontale est une plaque chauffante (37).

12. Dispositif selon les revendications 1 ainsi que 9 et 10, caractérisé en ce que la roue de roulement (19, 31) est pourvue d'un moletage ou d'une denture (39), sur une partie réduite de sa largeur.

13. Dispositif selon la revendication 5, caractérisé en ce que le moteur pneumatique (16) est monté sur une plaque de support (15), qui porte aussi une bobine de réserve (25), sur un bras (24) fixé sur celle-ci, pour la bande colorée à appliquer par vulcanisation.

14. Dispositif selon la revendication 1, caractérisé en ce qu'il est prévu sur le boîtier (18) une alimentation (28) courbée pour la bande colorée (26, 27) à appliquer par vulcanisation.

15. Dispositif selon la revendication 14, caractérisé en ce que l'alimentation (28) courbée loge des inserts en matière plastique, interchangeables, adaptés à la courbure, qui présentent une rainure de guidage adaptée à la largeur de la bande (26, 27) et à l'emplacement d'application sur la surface du pneumatique.
